# EUROPEAN PATENT SPECIFICATION

(11) **EP 1 564 242 B1**
(45) Date of publication and mention of the grant of the patent: **14.04.2010**
(21) Application number: 04380025.9
(22) Date of filing: 10.02.2004
(51) Int. Cl.: C08K 3/34, C08K 3/00, B01J 20/16, B01J 20/18

(54) **Process for the additivation of synthetic artificial fibers and polymers by encapsulation of additives in nanopores**
Prozess der Zusammensetzung von synthetischen Fasern und Polymeren durch Einkapselung der Additive in Nanoporen
Procédé d'additivation des fibres synthétiques et des polymères par encapsulation des additifs dans les nanopores

(43) Date of publication of application: 17.08.2005
(73) Proprietor: Sociedad Anónima Minera Catalano-Aragonesa, 50001 Zaragoza (ES)
(72) Inventor: Caballero Lopez, Miguel Angel, 50171 La Puebla de Alfinden Zaragoza (ES); Piera Camas, Elena, 50003 Zaragoza (ES); Segura Guajardo, Sergio, 50017 Zaragoza (ES); Santamaria Ramiro, Jesus, 50005 Zaragoza (ES); Coronas Cerresuela, Joaquin, 50015 Zaragoza (ES); Fleta Garcia, Fernando, 50016 Zaragoza (ES)
(74) Representative: Schäfer, Matthias W.

(56) References cited:
- WO-A1-01/06054
- US-A- 5 691 303

## Description

### OBJECT OF THE INVENTION

As stated in the title of this specification, the following invention refers to a process for the additivation of synthetic artificial fibers and polymers by means of encapsulation of additives in nanopores, concerning an encapsulation of additives with the aim of protecting them from the conditions of the manufacturing process for fibers and polymers and which permits their controlled dosing.

The present invention contributes important advantages with regard to already existing encapsulation processes due to permitting additives to be incorporated in the interior of fibers or polymers in the stages of reaction, extrusion or spinning, thus protecting them from use, washing and rubbing, at the same time releasing them in a sustained manner.

This invention permits the manufacture of fibers and polymers with special properties whose duration in time becomes prolonged with regard to already existing additivation processes.

More specifically, the present invention provides an alternative method of additivation of fibers and polymers permitting the additives to be introduced inside the polymer matrix, prolonging the duration of the desired effect.

### FIELD OF APPLICATION

This specification describes a process for the additivation of synthetic artificial fibers and polymers by means of encapsulation of the additives in nanopores, which is of special application in the field of additivation of fibers and polymers by means of encapsulation, preferably nano/microencapsulation of them in nanopores.

### BACKGROUND OF THE INVENTION

There exists a wide bibliography in relation to the encapsulation of substances and its application in fields as diverse as agriculture, cosmetics, food and the textile industry.

So, a large number of encapsulation and microencapsulation processes are known for additives, with capsules of different kinds and for different additives and/or substances, which are applied to very different fields. The majority of them refer to encapsulations and/or microencapsulations with polymers or other organic compounds, and are unable to protect the additives from the processing conditions of the majority of polymer-based products. So, most of these organic microcapsules are applied in the finishing stages and not in the manufacturing processes, the application being done in a surface process which means that the duration of its effect is limited by the action of friction, of washing or the use in general that is given to the product.

In this way, patent WO-01/06054 A1 filed by the company Avant-Garb, LLC., claims a synthesis method of nanoparticles for treatments of fibers, thread and fabrics, to which compounds with a polymer coating containing functional groups are applied during the finishing of the fiber.

There also exist numerous patents in which some kind of aluminosilicates are used for encapsulating substances, mainly ions and complexes giving rise to catalysts (e.g.: US-5944876, US-4199478); for encapsulating perfumes and additives for detergents and softeners (e.g.: US-5691303, WO-98/12298); for encapsulating dyes and pigments (e.g.: US-4874433); for the encapsulation of radioactive or toxic gases and waste in a permanent manner (e.g.: EP-0 049936) and exchanged with silver cations they are used as anti-microbial agents in fibers (e.g.: US-2002023304, KR-9702893), but in none of the cases are they used for the internal additivation of fibers and polymers in which the aim of the encapsulation is the sustained or prolonged release of the additives and/or their protection from the processing or external conditions, as in the present invention.

Among the patents found are also those that describe numerous processes for the incorporation of microcapsules into textiles. These patents claim incorporation processes of microcapsules into textile articles in the finishing stages since the different capsules used so far are of an organic nature and would not resist the conditions of the different manufacturing processes for fibers (e.g.: WO-0290643-A1, WO-03040453-A1).

### DESCRIPTION OF THE INVENTION

The present specification describes a process for the additivation of synthetic artificial fibers and polymers by means of encapsulation of the additives in nanopores of an aluminosilicate capsule which process comprises:
- the encapsulation of the additive in the nanopore
- incorporation of the capsule, preferably nano/microcapsule, into the polymer matrix of the fiber, and;
- spinning of the fiber;
withstanding the temperatures and other conditions of the different manufacturing processes which the fibers might undergo: polymerization, extrusion, spinning, warping, drawing, dying, weaving and finishes, permitting the introduction of the additive into the polymer matrix of them.

The additivation process of synthetic artificial fibers and polymers by means of encapsulation of the additives in nanopores protects the additives from the manufacturing processes of the fibers up to a process temperature of 300 °C.

The additivation process of synthetic artificial fibers and polymers by means of encapsulation of the additives in nanopores protects the additives from washing and rubbing, prolonging the duration of the effect of the additive when introducing the capsules into the polymer matrix.

Process of additivation of fibers wherein the capsules are aluminosilicates presenting a variable Si/Al ratio between 1 and infinity, with a particle size from 50 nm to 40 microns, in such a way that, in the case of additives for textile applications, the aluminosilicates must preferably have a particle size from 50 nm to 10 microns, and more preferably from 50 nm to 5 microns.

Process of additivation of fibers wherein the encapsulation conditions of the additive entail the non-permanent encapsulation of it, within a nanoporous aluminosilicate, producing controlled dosing of the additive.

Process of additivation of fibers wherein the humidity content (desorbible) in the aluminosilicates must preferably be less than 15% and more preferably less than 5%, for which the aluminosilicates must be activated/dehydrated by heating to a temperature between 150-350 °C and then be degasified by means of a vacuum pump for approximately 1 hour.

Process of additivation of fibers in which the additive to encapsulate is mixed with the aluminosilicate for a period of time that can vary between five and twenty-four hours, with continuous stirring in order to promote the additive-capsule contact, and at a temperature between 25 and 200 °C in order to accelerate the absorption equilibrium between the additive and the particles of aluminosilicate, in such a way that the capsule-additive proportions can be from 1/3 to 1/200, with 1/200 being preferable.

Process of additivation of fibers wherein the treatments carried out consist of centrifugation of the sample, drying of the capsules containing the additive, at variable temperature and time depending on the type of additive, being able to be from 25 to 100 °C for a period of time from 1 to 8 hours, and grinding of them, for a period of time that can vary from 3 to 30 minutes, which will break the possible lumps formed during the encapsulation process.

Process of additivation of fibers wherein the driving force for the dosing of the additive is the difference in concentration of it between the capsule and the polymer, and, in turn, between the polymer and the outside.

Process of additivation of fibers wherein the encapsulation conditions of the additive entail the permanent encapsulation of it within an aluminosilicate, in such a way that it remains retained both during the manufacturing process and during the life of the article, conferring a permanent property on the fiber.

Process of additivation of fibers wherein, in order to achieve the permanent encapsulation of an additive, an aluminosilicate is chosen with a pore size less than the additive molecules which, in order to be introduced, are subjected to a prior treatment such as might be oxidation, so that their structure is modified and they can pass through the pores and, once encapsulated, the inverse process is applied whereby the molecules recovers their size.

Process of additivation of fibers wherein, in order to achieve the permanent encapsulation of an additive, an aluminosilicate is used with a pore size sufficiently large so that the additive can enter its pores and, following encapsulation of the additive, a post-treatment is carried out with xylanes, boranes or germanes which are adsorbed in the mouth of the pores of the nanoporous aluminosilicate and then oxidized by treating them with steam or other oxidizing agents in order to block the exit of the encapsulated additive.

Process of additivation of fibers wherein the encapsulation of the additive is produced by absorption, adsorption and ion exchange of it in the aluminosilicate.

Process of additivation of fibers wherein the incorporation of the capsule into the polymer matrix of the fiber is done during the polymerization stage.

Process of additivation of fibers wherein the incorporation of the capsule into the polymer matrix of the fiber is done during the spinning stage.

Process of additivation of fibers wherein the incorporation of the capsule into the polymer matrix of the fiber is done during the spinning of the polymer just prior to its fusion or together with the dilution of the polymer, depending on the type of spinning.

Process of additivation of fibers wherein the incorporation of the capsule into the polymer matrix of the fiber is done by spraying the capsules over the filament at the outlet from the spinneret in the phase wherein the polymer has not yet solidified.

Process of additivation of fibers wherein the additives to encapsulate are among others: perfumes, essences, cosmetics (anti-cellulites, down retardants, moisturizing creams, deodorant, aloe-vera, essential oils, collagens, natural extracts, etc.), anti-mosquitoes, anti-stains, anti-odorants, anti-mites, medicines (anti-inflammatories, epulotics, vitamins, antibiotics, etc.), chromophores, inks, dyes, etc.

Process of additivation of polymers of by means of encapsulation of the additives in nanopores, comprising:
- encapsulation of the additive in the nanopore;
- incorporation of the capsule, preferably nano/microcapsule, into the matrix of the polymer, and
- extrusion and/or injection of the polymer,
withstanding the temperatures and other conditions of the different manufacturing processes which the polymers might undergo: polymerization, extrusion, injection and finishes, permitting the introduction of the additive into the matrix of them.

The additivation process of polymers protects the additives from the manufacturing processes of the polymers up to a process temperature of 300 °C.

Process of additivation of fibers wherein the capsule incorporated into the polymer matrix is an aluminosilicate, presenting a variable Si/Al ratio between 1 and infinity, with a particle size from 50 nm to 40 microns, preferably in the case of additives for plastics applications, the aluminosilicates have a particle size from 50 nm to 40 microns.

Process of additivation of fibers wherein the encapsulation conditions of the additive entail the non-permanent encapsulation of it, within a nanoporous aluminosilicate, producing controlled dosing of the additive.

Process of additivation of polymers wherein the humidity content (desorbible) in the aluminosilicates must preferably be less than 15% and more preferably less than 5%, for which the aluminosilicates must be activated/dehydrated by heating to a temperature between 150-350 °C and then be degasified by means of a vacuum pump for approximately 1 hour.

Process of additivation of polymers wherein the additive to encapsulate is mixed with the aluminosilicate for a period of time that can vary between five and twenty-four hours, with continuous stirring in order to promote the additive-capsule contact, and at a temperature between 25 and 200 °C (depending on the type of additive to encapsulate) in order to accelerate the absorption equilibrium between the additive and the particles of aluminosilicate, in such a way that the capsule-additive proportions can be from 1/3 to 1/200, with 1/200 being preferable.

Process of additivation of polymers wherein the post-treatments carried out consist of centrifugation of the sample, drying of the capsules containing the additive, at variable temperature and time depending on the type of additive, being able to be from 25 to 100 °C for a period of time from 1 to 8 hours, and grinding of them, for a period of time that can vary from 3 to 30 minutes, which will break the possible lumps formed during the encapsulation process.

Process of additivation of polymers wherein the driving force for the dosing of the additive is the difference in concentration of it between the capsule and the polymer, and, in turn, between the polymer and the outside.

Process of additivation of polymers wherein the encapsulation conditions of the additive entail the permanent encapsulation of it within an aluminosilicate, in such a way that it remains retained both during the manufacturing process and during the life of the article, conferring a permanent property on the polymer.

Process of additivation of polymers wherein, in order to achieve the permanent encapsulation of an additive, an aluminosilicate is chosen with a pore size less than the additive molecules which, in order to be able to be introduced, are subjected to a prior treatment such as might be oxidation, so that their structure is modified and they can pass through the pores and, once encapsulated, the inverse process is applied whereby the molecules recover their size.

Process of additivation of polymers wherein, in order to achieve the permanent encapsulation of an additive, an aluminosilicate is used with a pore size sufficiently large so that the additive can enter its pores and, following encapsulation of the additive, a post-treatment is carried out with xylanes, boranes or germanes which are adsorbed in the mouth of the pores of the nanoporous aluminosilicate, and then oxidized by treating them with steam or other oxidizing agents in order to block the exit of the encapsulated additive.

Process of additivation of polymers wherein the encapsulation of the additive is produced by absorption, adsorption and ion exchange of it, in the aluminosilicate.

Process of additivation of polymers wherein the incorporation of the nano/microcapsule into the polymer matrix is done during the polymerization stage.

Process of additivation of polymers wherein the incorporation of the nano/microcapsule into the polymer matrix is done during the extrusion or injection stage.

Process of additivation of polymers wherein the additives to encapsulate are among others: perfumes, essences, cosmetics anti-mosquitoes, anti-odorants, anti-mites, medicines, chromophores, inks, dyes, etc.

### BRIEF DESCRIPTION OF DRAWINGS

Figure 1.- Shows a comparative graph of the infrared spectra of a series of samples of aluminosilicates encapsulating aloe-vera, spectrum of the standard aluminosilicate and spectrum of the aloe-vera (aloe).
Figure 2.- Shows a comparative graph of the infrared spectra of a standard aluminosilicate and an aluminosilicate encapsulating an essence.
Figure 3.- Shows a comparative graph of the infrared spectra of a sample of a standard aluminosilicate and an aluminosilicate encapsulating an essence.
Figure 4.- Shows a diagram of the process of additivation of fibers and polymers wherein the additive is encapsulated in a permanent manner.
Figure 5.- Shows a diagram of the process of additivation of fibers and polymers wherein the additive is encapsulated in a non-permanent manner in the aluminosilicate producing controlled dosing of it.

### DESCRIPTION OF A PREFERRED EMBODIMENT

The present invention refers to a process for the additivation of synthetic artificial fibers and polymers based on the nanoencapsulation of the additives in nano/microparticles of nanoporous aluminosilicates comprising the nanoencapsulation process, the introduction of the capsule into the polymer and the processing of it for the manufacture of the end article.

Encapsulation techniques existing so far are based on organic and polymer capsules which would not be able to resist the conditions of the processes to which the polymer is subjected for end uses, both textiles and plastics. Also, the final size of the capsules is, in most cases, too large for being able to be introduced during the manufacturing process of the fibers. So, the encapsulated additives are applied to the fibers, in a superficial process in the finishing stages.

The object of this invention is the development of a process permitting different additives to be introduced into the polymer matrix of the fibers or polymers and thereby prolong its effect. To do this, it is proposed to use the nano/microparticles of nanoporous aluminosilicates as capsules, not just on account of their known capacity for absorption and their regular nanoporous structure but also because these materials resist extreme pH values, their thermal stability reaches temperatures of around 700 °C, they display high mechanical stability, and they are optically transparent in the visible region.

Moreover, they can be modified by means of techniques of chemical and physical deposition, ion exchange, etc. These characteristics of nanoporous aluminosilicates make them adequate as capsules wherein additives are introduced, protecting said additives from the conditions of the different manufacturing processes that might be undergone both by the fibers: polymerization, extrusion, spinning, dying, weaving and finishes, and by the polymers: polymerization, extrusion, injection.

As they are protected by the capsule, the additives can be introduced into the polymer matrix, of the fiber or the plastic during the manufacturing process of them, or in the stages wherein the polymer is melted, in such a way that the nano/microcapsules are protected by the polymer if they become detached due to the effect of washing and rubbing, remaining in its interior and thereby prolonging the life of the garment or article to be manufactured.

The capsules used are crystalline hydrated aluminosilicates with a regular nanoporous structure, consisting of TO₄ tetrahedra (where T = Si or Al) joined by their vertices. An isolated SiO₄ group would carry a charge of -4, though in a solid having an O/T ratio of 2 this unit is neutral because each atom of oxygen is a bridge between two T atoms. On the contrary, the net charge of the structure AlO₄ is -1, so the total structure of the aluminosilicate when it contains aluminum is negatively charged. These charges can be compensated by pentavalent atoms in the structure (P⁵⁺ in aluminophosphates) or by cations (organic or inorganic) or by protons (in the acid form). The ions are not part of the structure but instead remain in the channels.

The structural formula of these nanoporous aluminosilicates is as follows: Mm/n((AlO₂)m(SiO₂)_{y})*xH₂O, wherein "n" is the valence of the cation "M", "x" is the number of molecules of water per cell unit and "m" and "y" are the number of tetrahedra per cell unit.

The Si/Al ratio of these materials can vary considerably, the extremes being 1 and infinity. This permits the acidity of the material to vary, which increases when the Si/Al ratio decreases. Depending on the hydrophilic nature of the additive to encapsulate and the kinetic diameter of its molecules, a choice will be made of one type of aluminosilicate or another as capsule, choosing the one that is most adequate in each case on account of the pore size and Si/Al ratio.

The capsules to use must have a size that can vary from 50 nm to 40 microns, preferably in the case of additives for textile applications, the aluminosilicates must preferably have a particle size from 50 nm to 10 microns, and more preferably from 50 nm to 5 microns.

Examples of aluminosilicates used in the research:

| Aluminosilicate | Si/Al | Size (µm) |
|---|---|---|
| FA1 | 5 | 2 |
| FA2 | 5 | 0.5-1 |
| ZAG1 | 1 | 2-5 |
| Z5AL | 25 | 0.2-1 |
| B1G1 | 25 | 5.5 |
| B2G1 | 300 | 1.2 |

For the encapsulation of additives in aluminosilicates the humidity content (desorbible) of them must preferably be less than 15% and more preferably less than 5%. For this the aluminosilicate must be activated/dehydrated by heating to a temperature between 150-350 °C. Following the activation, another pretreatment is done on the sample consisting of degasification by means of a vacuum pump for approximately 1 hour. Following these pretreatments, the additive to be encapsulated is mixed with the capsule for a period of time that can vary between five and twenty-four hours, with continuous stirring in order to promote the additive-capsule contact, and heating at a temperature between 25 and 200 °C (depending on the type of additive to encapsulate) in order to accelerate the absorption equilibrium between the additive and the particles of aluminosilicate.

The capsule-additive proportions can be from 1/3 to 1/200, with 1/200 being preferable. The post-treatments that are carried out consist of centrifugation of the sample; this stage of separation is repeated as many times as necessary up to total elimination of the residue of additive from the sample. Following the separation, drying of the capsules containing the additive is done at variable temperature and time depending on the type of additive, being able to be from 25 to 100 °C for a period of time from 1 to 8 hours, and grinding of them, for a period of time that can vary from 3 to 30 minutes, which will break the possible lumps formed during the encapsulation process. In the process of nanoencapsulation of additives, the interaction between the latter and the capsule takes place by absorption, adsorption and ion exchange of it in the aluminosilicate.

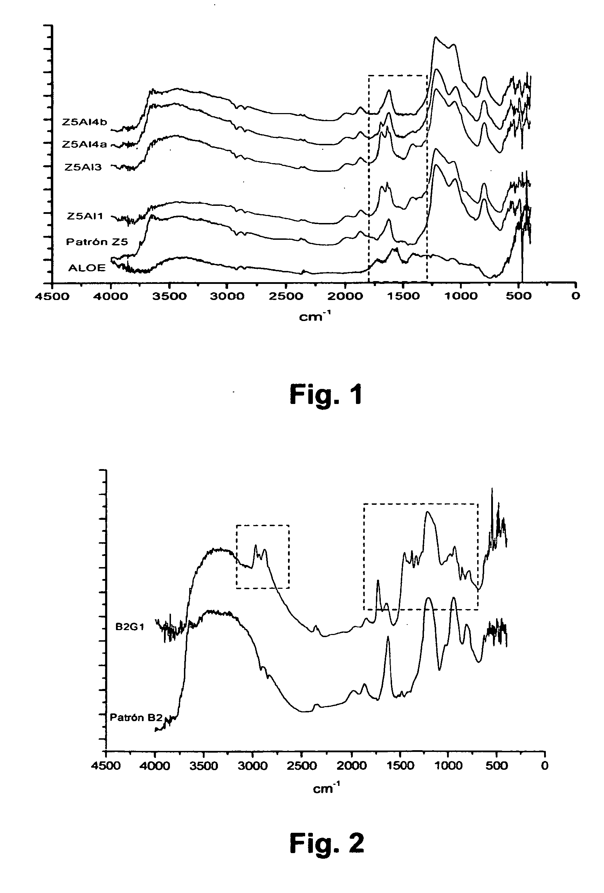

In order to check the encapsulation of the additive in the aluminosilicate, measurements are made of the decrease in the BET area indicating the volume of pores that is occupied by the additive and an IR spectroscopy analysis is done, obtaining results corresponding to figure 1, which indicate whether the functional groups characteristic of the additive are present inside the capsules or whether, on the contrary, they have become degraded during the encapsulation process.

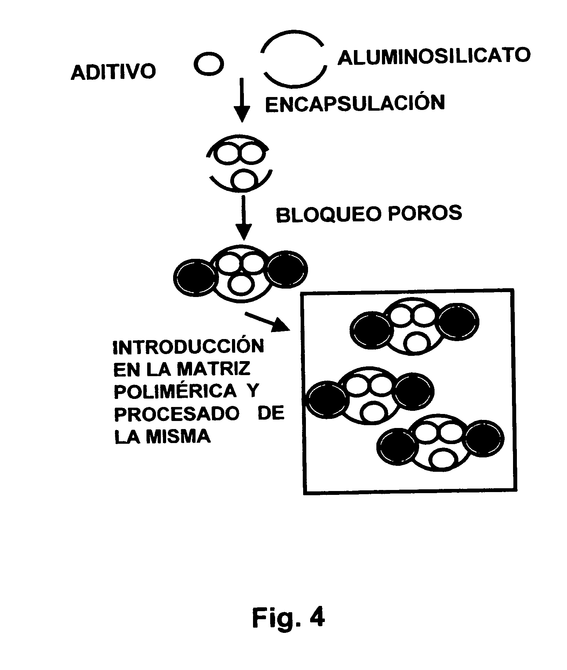

Depending on the encapsulation conditions and the type of aluminosilicate selected for it, a permanent encapsulation of the additive can be carried out (figure 4), in such a way that it is retained both during the manufacturing process and during the life of the article, conferring a permanent property to it.

So, in order to achieve permanent encapsulation of an additive an aluminosilicate is chosen with a pore size smaller than the molecules of the additive which, in order to be able to be introduced, are subjected to a prior treatment such as might be oxidation, so that their structure becomes modified and they can pass through the pores; once inside the capsule, the inverse process is applied and the molecules recover their size.

Another possibility is to use an aluminosilicate with a pore size sufficiently large so that the additive can enter into it and then, following its encapsulation, carry out a post-treatment with xylanes, boranes or germanes which are absorbed in the mouth of the pores of the nanoporous aluminosilicate and then oxidized by treating them with steam or other oxidizing agents in order to block the exit of the encapsulated additive.

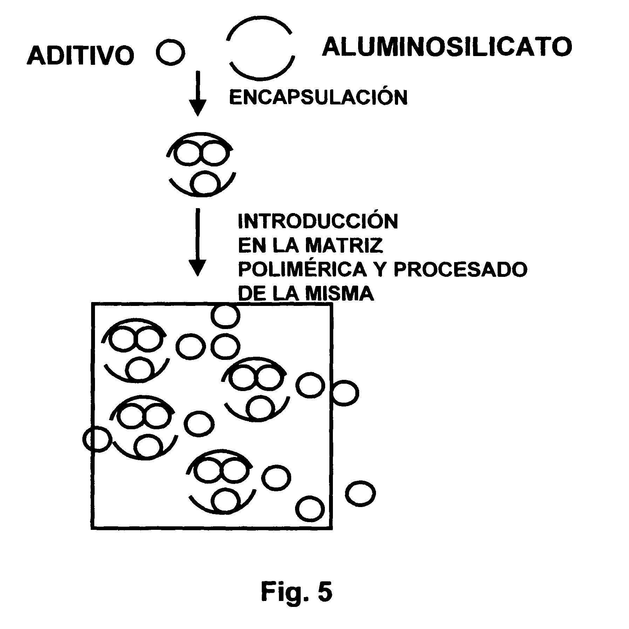

If, following the microencapsulation, no other post-treatment is carried out for blocking the exit of the additive, then one obtains a non-permanent encapsulation of it (figure 5). The additive encapsulated in the aluminosilicate will exit through the pore of it by diffusion, the driving force being the difference in concentration of additive between the capsule and the polymer and, in turn, between the polymer and the outside, producing controlled dosing of the additive.

Once the additive has been nanoencapsulated in the aluminosilicate, the incorporation of the nano/microcapsule into the polymer matrix of the fiber or of the polymer can be done during different stages of the manufacturing process of the article. In the case that the additivation is done in artificial or synthetic fibers, the additivation can be carried out in the following stages:
- During the polymerization reaction.
- During the spinning stage: adding it to the polymer just before it is melted by means of a powder doser connected to the extruder or together with the dissolution of the polymer, depending on the type of spinning, and during the solidification or freezing process of the fiber the nano/microparticles remain retained in the polymer matrix.
- It is done at the exit from the spinneret in the phase wherein the polymer has not yet solidified or frozen, spraying the capsules over the filament.

The entire spinning process is done in the same way and under the same conditions as spinning would be done of the fiber without additive. In the event that the additivation is done in polymers for plastics applications, the additivation can be done in the following stages:
- During the polymerization reaction.
- During the extrusion of the polymer, by means of a powder doser, together with the other additives in the compounding stage.
- Before injection of the piece when the polymer is melted.

In both cases, in order to facilitate the dosing and dispersion of the capsules in the polymer, as well as the processing of it, a small quantity of a process assistant, some dispersing agent and lubricant, both internal and external, are added during the grinding of the capsules. For example, 0.1-0.3% of a salt of montanic acid is sufficient for facilitating the processing.

The additivation process of the present invention permits the introduction of an infinity of additives into the polymer matrix of an infinity of articles to which they will confer special long-lasting properties, depending on their nature. The additives to encapsulate are, among others: perfumes, essences, cosmetics (anti-cellulites, down retardants, moisturizing creams, deodorant, aloe-vera, essential oils, collagens, natural extracts, etc.), anti-mosquitoes, anti-stains, anti-odorants, anti-mites, medicines (anti-inflammatories, epulotics, vitamins, antibiotics, etc.), chromophores, inks, dyes, etc.

In general, any substance that is unstable and/or requiring protection from the process conditions and/or requiring controlled dosing can be the object of this process. According to the additive used, this additivation process will permit a large variety of end articles to be obtained, whose fields of application can be very different, among others: sports clothing, underwear, protection clothing and articles, plastic textiles and articles for the medical sector, clothing and articles for bathing, the textile sector in general, the automobile sector, the electrical sector, the cosmetics sector, textiles and home articles, toys, glasses, detectors, etc.

Making reference to the figures, we can see how Figure 1 shows that the additive has been encapsulated in the aluminosilicate. It can be seen therein the infrared spectra of the additive, of the capsule and of five different samples of additive encapsulated in the aluminosilicate. It can be observed that the characteristic peaks of aloe-vera located between wavelengths 1,000-1,750 cm⁻¹ (aloe spectrum) appear next to the characteristic peaks of the capsule (Z5 pattern spectrum) in the IR of samples of aloe-vera encapsulated in aluminosilicate, presenting a certain displacement indicating the absorption of the molecules in the capsule.

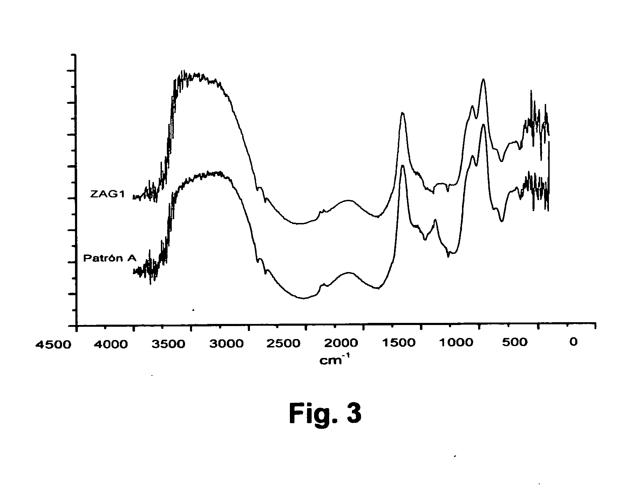

Figures 2 and 3 show the infrared spectra of two different aluminosilicates, aluminosilicate B2 and aluminosilicate A and the spectra of those two aluminosilicates after the encapsulation process of an essence. It can be seen how, following the encapsulation, the aluminosilicate B2 presents numerous new peaks corresponding to the essence encapsulated in it. Nevertheless, the spectrum of aluminosilicate A does not vary after the encapsulation process indicating that it has not taken place, which can be explained on the basis of the small pore size of aluminosilicate A (0.4 nm) with respect to the aluminosilicate B2, along with the hydrophilic nature of the latter, caused by the low Si/Al ratio of the aluminosilicate A (Si/Al = 1) with respect to aluminosilicate B2 (Si/Al = 300). These differences between the aluminosilicates mean that just one of them is capable of encapsulating an organophilic additive such as this essence.

### MODES OF EMBODIMENT OF THE INVENTION

The present invention is further illustrated by means of the following examples which are not restrictive of the scope.

### EXAMPLES:

### Example 1: Additivation of fibers of polyamide 6 with Aloe-vera

The aim of this additivation is to obtain multifilament thread of polyamide 6 for the lingerie market, containing aloe-vera. As aloe-vera is a natural product that would degrade under the processing conditions of the fibers, so it needs to be encapsulated before being applied to the fiber.

Pure aloe-vera was used extracted from the plant *Aloe barbadensis.* Given the hydrophilic nature of aloe-vera and its composition (3% of voluminous molecules of the type sugars, anthraquinones, vitamins, etc.), an aluminosilicate was selected for its encapsulation having the following characteristics: pore size 0.5 nm, Si/Al ratio = 25, particle size 200 nm 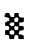 1 µm.

The encapsulation process was carried out in the following manner: 300 g of aluminosilicate were dehydrated by heating at a temperature of 150 °C for 8 hours, and were then degasified with a vacuum pump for an approximate period of time of 1 hour; after those pretreatments, the aloe-vera was mixed with the nano/microparticles of aluminosilicate for five hours, with continual stirring in order to favor the aloe-capsule contact, and warming at a temperature of 75 °C. The aloe-capsule proportion was 1500/300. The post-treatments that were carried out were centrifugation of the sample with separation of the aloe-vera, drying of the aluminosilicate at 100 °C for 8 hours, and grinding for 3 minutes.

In order to check the encapsulation of the additive in the aluminosilicate, measurements were made of the decrease in the BET area which indicated that 80% of the volume of pores were occupied by the additive and the sample was analyzed by IR spectroscopy, with the curve Z5AL3 of figure 1 being obtained, where it is seen that the characteristic peaks of the aloe-vera located between wavelengths 1000-1750 cm⁻¹ appear next to the characteristic peaks of the aluminosilicate in the IR of the sample of encapsulated aloe-vera (Z5AL3), presenting a certain displacement indicating the absorption of the molecules in the aluminosilicate.

The incorporation of the nano/microcapsules into the polymer matrix of the polyamide 6 fiber was done during the spinning of the polyamide. The 300 g of sample were additivated by means of a powder doser connected to the extruder of the spinneret. 40 reels of 1 kg of a fiber of polyamide 6 titer 44 dtex. and 34 filaments were produced, with a concentration of 1% of the nanoencapsulated additive, at a reeling speed of 3950 m/min. IR measurements were made of the thread obtained which revealed the presence of aloe-vera in its interior.

### Example 2: Additivation of polypropylene with a chromophore for plastic applications

The aim of this microencapsulation is to obtain injected pieces of polypropylene containing a chromophore that changes color, for the manufacture of toys.

A photochromic dye was used based on p-dimethylaminobenzonitrile. Given the organophilic nature of the additive, an aluminosilicate was selected for its encapsulation having the following characteristics: pore size 0.5 nm, Si/Al ratio = infinity, particle size 1-4 µm.

The encapsulation process was carried out in the following manner: 300 g of aluminosilicate were dehydrated by heating at a temperature of 150 °C for 8 hours, and were then degasified with a vacuum pump for a approximate period of time of 1 hour; after those pretreatments, the dye was mixed with the microparticles of aluminosilicate for five hours, with continual stirring in order to favor the additive-capsule contact, at room temperature. The additive-capsule proportion was 1500/300. The post-treatments that were carried out were centrifugation of the sample with separation of the photochromic dye, drying of the aluminosilicate at 100 °C for 8 hours, and grinding for 3 minutes.

In order to check the encapsulation of the additive in the aluminosilicate, measurements were made of the decrease in the BET area which indicated that 50% of the volume of pores were occupied by the additive and the sample was subjected to UV light in order to check that the photochromic effects of the additive remained once it had been encapsulated.

The incorporation of the microcapsules into the polymer matrix of the polypropylene was done during the extrusion of the polymer, the stage when the additivation of stabilizers and lubricants required for the injection of the polymer was also done. The 300 g of sample were additivated by means of a powder doser to the extruder in such a way that the resulting grains contained 0.1% of chromophore. The pieces obtained following the injection maintained their photochromic properties, changing from white to violet when going from shade to sun and recovering their white color a few seconds after returning to the shade.

## Claims

1. Process for the additivation of synthetic artificial fibers and polymers by encapsulation of additives in nanopores, being of use in many industries, such as the pharmaceutical, agricultural, cosmetic, food and textile industries, the process comprising:
encapsulation of the additive in the nanopore of an aluminosilicate capsule withstanding the temperatures and other conditions of the different manufacturing processes which the fibers undergo, incorporation of the capsule, preferably nano/microcapsule, into the polymer matrix of the fiber, and;
spinning of the fiber; and introduction of the encapsulated additive into the polymer matrix of the fibers.

2. Process for the additivation of fibers, in accordance with claim 1, **characterized in that** the temperature of the manufacturing processes of the fibers is up to 300° C.

3. Process for the additivation of fibers, in accordance with claim 1, **characterized in that** the capsule incorporated into the polymer matrix of the fiber is an aluminosilicate presenting a variable Si/Al ratio between 1 and infinity, with a particle size from 50 nm to 40 microns, preferably from 50 nm to 10 microns, and more preferably from 50 nm to 5 microns.

4. Process for the additivation of fibers, in accordance with claims 1 and 3, **characterized in that** the encapsulation conditions of the additive entail the non-permanent encapsulation of it within a nanoporous aluminosilicate, producing controlled dosing of the additive.

5. Process for the additivation of fibers, in accordance with claim 4, **characterized in that** the humidity content in the aluminosilicates is less than 15%, preferably less than 5%.

6. Process for the additivation of fibers according to claim 5, **characterized in that** the aluminosilicates are activated/dehydrated by heating to a temperature between 150-350°C and then are degasified by means of a vacuum pump for approximately 1 hour.

7. Process for the additivation of fibers, in accordance with claim 4, **characterized in that** the additive to encapsulate is mixed with the aluminosilicate for a period of time between five and twenty-four hours, with continuous stirring in order to promote the additive-capsule contact, and at a temperature between 25 and 200°C (depending on the type of additive to encapsulate) in order to accelerate the absorption equilibrium between the additive and the particles of aluminosilicate

8. Process for the additivation of fibers acccording to claim 7, **characterized in that** the capsule-additive proportions are from 1/3 to 1/200, with 1/200 being preferable.

9. Process for the additivation of fibers, in accordance with claim 4, **characterized in that** the post-treatments, which are carried out after contacting the additive and the aluminosilicate capsule in order to provide encapsulation, consist of centrifugation of the sample, drying of the capsules containing the additive, at variable temperature and time depending on the type of additive, being from 25 to 100°C for a period of time from 1 to 8 hours, and grinding of them, for a period of time from 3 to 30 minutes, which will break the possible lumps formed during the encapsulation process.

10. Process for the additivation of fibers, in accordance with claim 4, **characterized in that** the driving force for the dosing of the additive is the difference in concentration of it between the capsule and the polymer, and, in turn, between the polymer and the outside.

11. Process for the additivation of fibers, in accordance with claims 1 and 3, **characterized in that**, in order to achieve the permanent encapsulation of an additive, an aluminosilicate is chosen with a pore size less than the additive molecules which, in order to be able to be introduced, are subjected to a prior treatment such as oxidation, so that their structure is modified and they can pass through the pores, once the additive is encapsulated, in according with claims 5-9 the inverse process is applied whereby the molecules recover their size.

12. Process for the additivation of fibers, in accordance with claims 1 and 3, **characterized in that**, in order to achieve the permanent encapsulation of an additive, an aluminosilicate is used with a pore size sufficiently large so that the additive can enter its pores and following encapsulation of the additive in accordance with claims 5-9, a post-treatment is carried out with xylanes, boranes or germanes which are adsorbed in the mouth of the pores of the nanoporous aluminosilicate and then oxidized by treating them with steam or other oxidizing agents in order to block the exit of the encapsulated additive.

13. Process for the additivation of fibers, in accordance with claims 1 and 3, **characterized in that** the encapsulation of the additive is produced by absorption, adsorption and ion exchange of it, in the aluminosilicate.

14. Process for the additivation of fibers, in accordance with claim 1, **characterized in that** the incorporation of the capsule into the polymer matrix of the fiber is done during the polymerization stage.

15. Process for the additivation of fibers, in accordance with claim 1, **characterized in that** the incorporation of the capsule into the polymer matrix of the fiber is done during the spinning stage.

16. Process for the additivation of fibers, in accordance with claim 1, **characterized in that** the incorporation of the capsule into the polymer matrix of the fiber is done during the spinning of the polymer just prior to its fusion or together with the dilution of the polymer, depending on the type of spinning.

17. Process for the additivation of fibers, in accordance with claim 1, **characterized in that** the incorporation of the capsule into the polymer matrix of the fiber is done by crushing the capsules over the filament at the outlet from the spinneret in the phase in which the polymer has not yet solidified.

18. Process for the additivation of fibers, in accordance with claim 1, **characterized in that** the additives to encapsulate are among others: perfumes, essences, cosmetics, anti-cellulites, moisturizing creams, deodorant, aloe-vera, essential oils, collagen, natural extracts, anti-mosquitoes, anti-stains, anti-odorants, anti-mites, chromophores, inks, dyes, medicines such as anti-inflammatories, epulotics, vitamins, antibiotics.

19. Process for the additivation of polymers which process comprises:
encapsulation of the additive in the nanopore of an aluminosilicate capsule protecting it from the temperatures and other conditions of the different manufacturing processes which the polymers undergo;
incorporation of the capsule, preferably nano/microcapsule, into the matrix of the polymer, and
extrusion and/or injection of the polymer, and introduction of the additive in the matrix of the polymer.

20. Process for the additivation of polymers, in accordance with claim 19, **characterized in that** the temperature of the manufacturing processes of the polymer is up to 300°C.

21. Process for the additivation of polymers, in accordance with claim 19, **characterized in that** the capsule incorporated into the polymer matrix is an aluminosilicate, presenting a variable Si/Al ratio between 1 and infinity, with a particle size from 50 nm to 40 microns.

22. Process for the additivation of polymers, in accordance with claims 19, **characterized in that** the encapsulation conditions of the additive entail the non-permanent encapsulation of it within a nanoporous aluminosilicate, producing controlled dosing of the additive.

23. Process for the additivation of polymers, in accordance with claim 22, **characterized in that** the humidity content in the aluminosilicates is less than 15%, preferably less than 5%.

24. Process for the additivation of polymers according to claim 23, **characterized in that** the aluminosilicate are activated/dehydrated by heating to a temperature between 150-350°C and then are degasified by means of a vacuum pump for approximately 1 hour.

25. Process for the additivation of polymers, in accordance with claim 22, **characterized in that** the additive to encapsulate is mixed with the aluminosilicate for a period of time between five and twenty-four hours, with continuous stirring in order to promote the additive-capsule contact, and at a temperature between 25 and 200°C (depending on the type of additive to encapsulate) in order to accelerate the absorption equilibrium between the additive and the particles of aluminosilicate.

26. Process for the additivation of polymers according to claim 25, **characterized in that** the capsule-additive proportions are from 1/3 to 1/200, with 1/200 being preferable.

27. Process for the additivation of polymers, in accordance with claim 22, **characterized in that** the post-treatments, which are carried out after contacting the additive and the aluminosilicate capsule in order to provide encapsulation, consist of centrifugation of the sample, drying of the capsules containing the additive, at variable temperature and time depending on the type of additive, being from 25 to 100°C for a period of time from 1 to 8 hours, and grinding of them, for a period of time from 3 to 30 minutes, which will break the possible lumps formed during the encapsulation process.

28. Process for the additivation of polymers, in accordance with claim 22, **characterized in that** the driving force for the dosing of the additive is the difference in concentration of it between the capsule and the polymer, and, in turn, between the polymer and the outside.

29. Process for the additivation of polymers, in accordance with claim 19 and 21, **characterized in that**, in order to achieve the permanent encapsulation of an additive, an aluminosilicate is chosen with a pore size less than the additive molecules which, in order to be able to be introduced, are subjected to a prior treatment such as oxidation, so that their structure is modified and they can pass through the pores, once the additive is encapsulate in accordance with claims 23-27 the inverse process is applied whereby the molecules recover their seize.

30. Process for the additivation of polymers, in accordance with claim 19 and 21, **characterized in that**, in order to achieve the permanent encapsulation of an additive, an aluminosilicate is used with a pore size sufficiently large so that the additive can enter its pores and following encapsulation of the additive in accordance with claims 23-27 , a post-treatment is carried out with xylanes, boranes or germanes which are adsorbed in the mouth of the pores of the nanoporous aluminosilicate and then oxidized by treating them with steam or other oxidizing agents in order to block the exit of the encapsulated additive.

31. Process for the additivation of polymers, in accordance with claims 19 and 21, **characterized in that** the encapsulation of the additive is produced by absorption, adsorption and ion exchange of it in the aluminosilicate.

32. Process for the additivation of polymers, in accordance with claim 19, **characterized in that** the incorporation of the capsule into the polymer matrix is done during the polymerization stage.

33. Process for the additivation of polymers, in accordance with claim 19, **characterized in that** the incorporation of the capsule into the polymer matrix is done during the extrusion or injection stage.

34. Process for the additivation of polymers, in accordance with claim 19, **characterized in that** the additives to encapsulate are among others: perfumes, essences, cosmetics anti-mosquitoes, anti-mites, medicines, chromophores, inks, and dyes.

## Patentansprüche

1. Verfahren zum Additivzusatz von synthetischen Kunstfasern und Polymeren mittels der Einkapselung von Additiven in Nanoporen, welches in vielerlei Industriezweigen wie beispielsweise der pharmazeutischen Industrie, der Landwirtschaft, der Kosmetikindustrie, der Nahrungsmittel- und Textilindustrie von Nutzen ist, wobei das Verfahren folgende Schritte umfasst:
- Einkapselung der Additive in der Nanopore einer Aluminiumsilikat-Kapsel, so dass sie den Temperaturen und anderen Gegebenheiten der unterschiedlichen Herstellungsprozesse, denen die Fasern unterworfen sind, widerstehen können,
- Beimischung der Kapsel, bevorzugt der Nano-/Mikrokapsel, in die Polymermatrix der Faser, und
- Spinnen der Faser, und
- Einfügung der eingekapselten Additive in die Polymermatrix der Fasern.

2. Verfahren zum Additivzusatz von Fasern gemäß Anspruch 1, **dadurch gekennzeichnet, dass** die Temperatur der Herstellungsprozesse der Fasern bis zu 300°C beträgt.

3. Verfahren zum Additivzusatz von Fasern gemäß Anspruch 1, **dadurch gekennzeichnet, dass** die Kapsel, welche der Polymermatrix der Faser beigemischt ist, ein Aluminiumsilikat mit einem variablem Si/Al-Verhältnis zwischen 1 und unendlich ist und eine Partikelgröße von 50 nm bis 40 µm, bevorzugt von 50 nm bis 10 µm, und besonders bevorzugt von 50 nm bis 5 µm aufweist.

4. Verfahren zum Additivzusatz von Fasern gemäß Anspruch 1 und 3, **dadurch gekennzeichnet, dass** die Bedingungen der Einkapselung des Additivs die nichtpermanente Einkapselung desselben in einem nanoporösen Aluminiumsilikat mit sich bringen, so dass sich eine kontrollierte Dosierung des Additivs ergibt.

5. Verfahren zum Additivzusatz von Fasern gemäß Anspruch 4, **dadurch gekennzeichnet, dass** der Feuchtigkeitsgehalt in den Aluminiumsilikaten weniger als 15% und bevorzugt weniger als 5% beträgt.

6. Verfahren zum Additivzusatz von Fasern gemäß Anspruch 5, **dadurch gekennzeichnet, dass** die Aluminiumsilikate durch Aufheizen auf eine Temperatur zwischen 150°C - 350°C aktiviert/dehydriert werden, und danach für ungefähr eine Stunde mittels einer Vakuumpumpe entgast werden.

7. Verfahren zum Additivzusatz von Fasern gemäß Anspruch 4, **dadurch gekennzeichnet, dass** das einzukapselnde Additiv mit dem Aluminiumsilikat für ungefähr einen Zeitraum von fünf bis vierundzwanzig Stunden gemischt wird, wobei es kontinuierlich gerührt wird, um den Kontakt zwischen Additiv und Kapsel zu fördern, bei einer Temperatur zwischen 25 und 200°C (in Abhängigkeit vom Typ des einzukapselnden Additivs), um das Absorptionsgleichgewicht zwischen dem Additiv und den Aluminiumsilikatpartikeln zu beschleunigen.

8. Verfahren zum Additivzusatz von Fasern gemäß Anspruch 7, **dadurch gekennzeichnet, dass** das Verhältnis von Kapsel und Additiv im Bereich von 1/3 bis 1/200 liegt, wobei 1/200 bevorzugt ist.

9. Verfahren zum Additivzusatz von Fasern gemäß Anspruch 4, **dadurch gekennzeichnet, dass** die Nachbehandlungen, welche nach dem Kontaktieren der Additive mit der Aluminiumsilikatkapsel zur Bereitstellung der Einkapselung durchgeführt werden, aus
- dem Zentrifugieren der Probe,
- dem Trocknen der das Additiv enthaltenden Kapseln bei einer vom Typ des Additivs variablen Temperatur von 25 bis 100°C und Dauer über einen Zeitraum von 1 bis 8 Stunden, und
- einem Mahlen derselben über einen Zeitraum von 3 bis 30 Minuten, welcher gegebenenfalls vorhandene Klumpen, die sich während des Einkapselungsprozesses gebildet haben, aufbricht,
bestehen.

10. Verfahren zum Additivzusatz von Fasern gemäß Anspruch 4, **dadurch gekennzeichnet, dass** das die antreibende Kraft zum Dosieren des Additivs der Konzentrationsunterschied desselben zwischen der Kapsel und dem Polymer, und somit zwischen dem Polymer und der Außenseite ist.

11. Verfahren zum Additivzusatz von Fasern gemäß Anspruch 1 und 3, **dadurch gekennzeichnet, dass**, um eine permanente Einkapselung eines Additivs zu erhalten, ein Aluminiumsilikat ausgewählt wird, das eine geringere Porengröße als die Additivmoleküle aufweist, welche, um eingefügt werden zu können, einer Vorbehandlung wie einer Oxidation unterzogen werden, so dass ihre Struktur verändert wird und sie die Poren passieren können, und dass, sobald das Additiv gemäß der Ansprüche 5 bis 9 eingekapselt ist, das umgekehrte Verfahren angewendet wird, wobei die Moleküle ihre Größe wiedererhalten.

12. Verfahren zum Additivzusatz von Fasern gemäß Anspruch 1 und 3, **dadurch gekennzeichnet, dass**, um eine permanente Einkapselung eines Additivs zu erhalten, ein Aluminiumsilikat benutzt wird, das eine Porengröße aufweist, die ausreichend groß ist, dass das Additiv in seine Poren eintreten kann, und dass, nachfolgend der Einkapselung des Additivs gemäß der Ansprüche 5 bis 9, eine Nachbehandlung mit Xylanen, Boranen oder Germaniumanen erfolgt, die im Eingangsbereich der Poren des nanoporösen Aluminiumsilikats adsorbiert werden, und dann mittels einer Behandlung mit Dampf oder anderen oxidierenden Mitteln oxidiert werden, um das Austreten des eingekapselten Additivs zu blockieren.

13. Verfahren zum Additivzusatz von Fasern gemäß Anspruch 1 und 3, **dadurch gekennzeichnet, dass** die Einkapselung des Additivs mittels Absorption, Adsorption und Ionenaustausch desselben im Aluminiumsilikat erreicht wird.

14. Verfahren zum Additivzusatz von Fasern gemäß Anspruch 1, **dadurch gekennzeichnet, dass** die Einfügung der Kapsel in die Polymermatrix der Faser während der Polymerisation erfolgt.

15. Verfahren zum Additivzusatz von Fasern gemäß Anspruch 1, **dadurch gekennzeichnet, dass** die Einfügung der Kapsel in die Polymermatrix der Faser während des Spinnvorgangs erfolgt.

16. Verfahren zum Additivzusatz von Fasern gemäß Anspruch 1, **dadurch gekennzeichnet, dass** die Einfügung der Kapsel in die Polymermatrix der Faser während des Spinnvorgangs des Polymers unmittelbar vor seinem Verschmelzen, oder gemeinsam mit der Streckung des Polymers erfolgt, abhängig vom Typ des Spinnens.

17. Verfahren zum Additivzusatz von Fasern gemäß Anspruch 1, **dadurch gekennzeichnet, dass** die Einfügung der Kapsel in die Polymermatrix erfolgt, indem die Kapseln über dem Filament am Ausgang des Spinnerets in der Phase, in welcher der Polymer noch nicht erstarrt ist, gebrochen werden.

18. Verfahren zum Additivzusatz von Fasern gemäß Anspruch 1, **dadurch gekennzeichnet, dass** die Additive zum Einkapseln unter anderem Parfüme, Essenzen, Kosmetika, Anti-Zellulite, Feuchtigkeitscremes, Deodorants, Aloe-Vera, ätherische Öle, Kollagene, natürliche Extrakte, Anti-Moskito-Mittel, Fleckentferner, Geruchsentferner, Milbenmittel, Chromophore, Tinten, Farbstoffe oder medizinische Wirkstoffe wie z.B. Entzündungshemmer, Wundheilmittel, Vitamine oder Antibiotika, sind.

19. Verfahren zum Additivzusatz von Polymeren, wobei das Verfahren umfasst:
- Einkapselung der Additive in der Nanopore einer Aluminiumsilikat-Kapsel, so dass es von den Temperaturen und anderen Gegebenheiten der unterschiedlichen Herstellungsprozesse, denen die Polymere unterworfen sind, geschützt ist;
- Beimischung der Kapsel, bevorzugt der Nano-/Mikrokapsel, in die Polymermatrix, und
- Extrusion und/oder Injektion des Polymers, und
- Einfügung des Additivs in die Polymermatrix.

20. Verfahren zum Additivzusatz von Polymeren gemäß Anspruch 19, **dadurch gekennzeichnet, dass** die Temperatur der Herstellungsprozesse der Polymere bis zu 300°C beträgt.

21. Verfahren zum Additivzusatz von Polymeren gemäß Anspruch 19, **dadurch gekennzeichnet, dass** die Kapsel, welche der Polymermatrix eingefügt ist, ein Aluminiumsilikat mit einem variablem Si/Al-Verhältnis zwischen 1 und unendlich ist und eine Partikelgröße von 50 nm bis 40 µm aufweist.

22. Verfahren zum Additivzusatz von Polymeren gemäß Anspruch 19, **dadurch gekennzeichnet, dass** die Bedingungen der Einkapselung des Additivs die nichtpermanente Einkapselung desselben in einem nanoporösen Aluminiumsilikat mit sich bringen, so dass sich eine kontrollierte Dosierung des Additivs ergibt.

23. Verfahren zum Additivzusatz von Polymeren gemäß Anspruch 22, **dadurch gekennzeichnet, dass** der Feuchtigkeitsgehalt in den Aluminiumsilikaten weniger als 15% und bevorzugt weniger als 5% beträgt.

24. Verfahren zum Additivzusatz von Polymeren gemäß Anspruch 23, **dadurch gekennzeichnet, dass** das Aluminiumsilikat durch Aufheizen auf eine Temperatur zwischen 150°C - 350°C aktiviert/dehydriert wird, und danach für ungefähr eine Stunde mittels einer Vakuumpumpe entgast werden.

25. Verfahren zum Additivzusatz von Polymeren gemäß Anspruch 22, **dadurch gekennzeichnet, dass** das einzukapselnde Additiv mit dem Aluminiumsilikat für ungefähr einen Zeitraum von fünf bis vierundzwanzig Stunden gemischt wird, wobei es kontinuierlich gerührt wird, um den Kontakt zwischen Additiv und Kapsel zu fördern, bei einer Temperatur zwischen 25 und 200°C (in Abhängigkeit vom Typ des einzukapselnden Additivs), um das Absorptionsgleichgewicht zwischen dem Additiv und den Aluminiumsilikatpartikeln zu beschleunigen.

26. Verfahren zum Additivzusatz von Polymeren gemäß Anspruch 25, **dadurch gekennzeichnet, dass** das Verhältnis von Kapsel und Additiv im Bereich von 1/3 bis 1/200 liegt, wobei 1/200 bevorzugt ist.

27. Verfahren zum Additivzusatz von Polymeren gemäß Anspruch 22, **dadurch gekennzeichnet, dass** die Nachbehandlungen, welche nach dem Kontaktieren der Additive mit der Aluminiumsilikatkapsel zur Bereitstellung der Einkapselung durchgeführt werden, aus
- dem Zentrifugieren der Probe,
- dem Trocknen der das Additiv enthaltenden Kapseln bei einer vom Typ des Additivs variablen Temperatur von 25 bis 100°C und Dauer über einen Zeitraum von 1 bis 8 Stunden, und
- einem Mahlen derselben über einen Zeitraum von 3 bis 30 Minuten, welcher gegebenenfalls vorhandene Klumpen, die sich während des Einkapselungsprozesses gebildet haben, aufbricht,
bestehen.

28. Verfahren zum Additivzusatz von Polymeren gemäß Anspruch 22, **dadurch gekennzeichnet, dass** das die antreibende Kraft zum Dosieren des Additivs der Konzentrationsunterschied desselben zwischen der Kapsel und dem Polymer, und somit zwischen dem Polymer und der Außenseite ist.

29. Verfahren zum Additivzusatz von Polymeren gemäß Anspruch 19 und 21, **dadurch gekennzeichnet, dass**, um eine permanente Einkapselung eines Additivs zu erhalten, ein Aluminiumsilikat ausgewählt wird, das eine geringere Porengröße als die Additivmoleküle aufweist, welche, um eingefügt werden zu können, einer Vorbehandlung wie beispielsweise einer Oxidation unterzogen werden, so dass ihre Struktur verändert wird und sie die Poren passieren können, und dass, sobald das Additiv gemäß der Ansprüche 23 bis 27 eingekapselt ist, das umgekehrte Verfahren angewendet wird, wobei die Moleküle ihre Größe wiedererhalten.

30. Verfahren zum Additivzusatz von Polymeren gemäß Anspruch 19 und 21, **dadurch gekennzeichnet, dass**, um eine permanente Einkapselung eines Additivs zu erhalten, ein Aluminiumsilikat benutzt wird, das eine Porengröße aufweist, die ausreichend groß ist, dass das Additiv in seine Poren eintreten kann, und dass, nachfolgend der Einkapselung des Additivs gemäß der Ansprüche 23 bis 27, eine Nachbehandlung mit Xylanen, Boranen oder Germaniumanen erfolgt, die im Eingangsbereich der Poren des nanoporösen Aluminiumsilikats adsorbiert werden, und dann mittels einer Behandlung mit Dampf oder anderen oxidierenden Mitteln oxidiert werden, um das Austreten des eingekapselten Additivs zu blockieren.

31. Verfahren zum Additivzusatz von Polymeren gemäß Anspruch 19 und 21, **dadurch gekennzeichnet, dass** die Einkapselung des Additivs mittels Absorption, Adsorption und Ionenaustausch desselben im Aluminiumsilikat erreicht wird.

32. Verfahren zum Additivzusatz von Polymeren gemäß Anspruch 19, **dadurch gekennzeichnet, dass** die Einfügung der Kapsel in die Polymermatrix während der Polymerisierung erfolgt.

33. Verfahren zum Additivzusatz von Polymeren gemäß Anspruch 19, **dadurch gekennzeichnet, dass** die Einfügung der Kapsel in die Polymermatrix während der Extrusions- oder Injektionsphase erfolgt.

34. Verfahren zum Additivzusatz von Polymeren gemäß Anspruch 19, **dadurch gekennzeichnet, dass** die Additive zum Einkapseln unter anderem Parfüme, Essenzen, Kosmetika, Anti-Moskito-Mittel, Milbenmittel, medizinische Wirkstoffe, Chromophore, Tinten oder Farbstoffe sind.

## Revendications

1. Procédé d'additivation des fibres artificielles synthétiques et des polymères par encapsulation des additifs dans des nanopores, utilisable avantageusement dans différentes industries comme les industries pharmaceutiques, agricoles, cosmétiques, alimentaires et textiles, le procédé comprenant :
l'encapsulation de l'additif dans le nanopore d'une capsule d'aluminosilicate résistant aux températures et aux autres conditions des différents procédés de fabrication que les fibres subissent ;
l'incorporation de la capsule, de préférence une nano/microcapsule, dans la matrice de polymère de la fibre, et ;
le filage de la fibre ; et
l'introduction de l'additif encapsulé dans la matrice de polymère des fibres.

2. Procédé d'additivation de fibres, selon la revendication 1, **caractérisé en ce que** la température des procédés de fabrication des fibres est supérieure à 300° C.

3. Procédé d'additivation de fibres, selon la revendication 1, **caractérisé en ce que** la capsule incorporée dans la matrice de polymère de la fibre est un aluminosilicate présentant un rapport variable Si/A1 allant de 1 à l'infini, avec une taille de particule comprise entre 50 nm et 40 microns, de préférence entre 50 nm et 10 microns et idéalement entre 50 nm et 5 microns.

4. Procédé d'additivation de fibres, selon les revendications 1 et 3, **caractérisé en ce que** les conditions d'encapsulation de l'additif engendrent l'encapsulation non permanente de celui-ci dans un aluminosilicate nanoporeux, entraînant le dosage contrôlé de l'additif.

5. Procédé d'additivation de fibres, selon la revendication 4, **caractérisé en ce que** l'humidité contenue dans les aluminosilicates est inférieure à 15 %, de préférence inférieure à 5 %.

6. Procédé d'additivation de fibres, selon la revendication 5, **caractérisé en ce que** les aluminosilicates sont activés/déshydratés par chauffage à une température comprise entre 150 et 350° C, puis dégazéifiés à l'aide d'une pompe à vide pendant environ 1 heure.

7. Procédé d'additivation de fibres, selon la revendication 4, **caractérisé en ce que** l'additif à encapsuler est mélangé à l'aluminosilicate pour une durée allant de cinq à vingt-quatre heures, avec une agitation continue afin de favoriser le contact entre l'additif et la capsule et à une température comprise entre 25 et 200° C (selon le type d'additif à encapsuler) afin d'accélérer l'équilibre d'absorption entre l'additif et les particules d'aluminosilicate.

8. Procédé d'additivation de fibres, selon la revendication 7, **caractérisé en ce que** les proportions de la capsule et de l'additif soient comprises entre 1/3 et 1/200, et de préférence égales 1/200.

9. Procédé d'additivation de fibres, selon la revendication 4, **caractérisé en ce que** les traitements ultérieurs, effectués après la mise en contact de l'additif et de la capsule d'aluminosilicate pour permettre l'encapsulation, consistent en la centrifugation de l'échantillon, le séchage des capsules contenant l'additif à une température et à une durée variables qui dépendent du type d'additif, allant de 25 à 100° C pour une durée allant de 1 à 8 heures et leur concassement pour une durée allant de 3 à 30 minutes qui écrasera les éventuels morceaux ayant pu se former pendant le procédé d'encapsulation.

10. Procédé d'additivation de fibres, selon la revendication 4, **caractérisé en ce que** la force motrice pour le dosage de l'additif correspond à la différence de concentration de celui-ci entre la capsule et le polymère, ainsi qu'à la différence de concentration de celui-ci entre le polymère et l'extérieur.

11. Procédé d'additivation de fibres, selon les revendications 1 et 3, **caractérisé en ce que**, pour obtenir l'encapsulation permanente d'un additif, un aluminosilicate est choisi avec une dimension de pores inférieure à celle des molécules des additifs qui, pour pouvoir être introduites, sont soumises à un traitement préalable tel que l'oxydation, afin que leur structure soit modifiée et qu'elles puissent passer à travers les pores, et **en ce que** une fois que l'additif est encapsulé selon les revendications 5 à 9, le processus inverse est appliqué, moyennant quoi les molécules retrouvent leur dimension.

12. Procédé d'additivation de fibres, selon les revendications 1 et 3, **caractérisé en ce que**, pour obtenir l'encapsulation permanente d'un additif, un aluminosilicate est utilisé avec une dimension de pores suffisamment large pour que l'additif puisse passer dans ses pores et, suite à l'encapsulation de l'additif selon les revendications 5 à 9, un traitement ultérieur est effectué avec des xylanes, des boranes ou des germanes qui sont absorbés au niveau de l'ouverture des pores de l'aluminosilicate nanoporeux, puis oxydés par un traitement à base de vapeur ou d'autres agents oxydants afin de bloquer l'issue des additifs encapsulés.

13. Procédé d'additivation de fibres, selon les revendications 1 et 3, **caractérisé en ce que** l'encapsulation de l'additif est produite par absorption, adsorption et échange ionique de celui-ci dans l'aluminosilicate.

14. Procédé d'additivation de fibres, selon la revendication 1, **caractérisé en ce que** l'incorporation de la capsule dans la matrice de polymère de la fibre est effectuée pendant l'étape de polymérisation.

15. Procédé d'additivation de fibres, selon la revendication 1, **caractérisé en ce que** l'incorporation de la capsule dans la matrice de polymère de la fibre est effectuée pendant l'étape du filage.

16. Procédé d'additivation de fibres, selon la revendication 1, **caractérisé en ce que** l'incorporation de la capsule dans la matrice de polymère de la fibre est effectuée pendant le filage du polymère juste avant sa fusion ou en même temps que la dilution du polymère, selon le type de filage.

17. Procédé d'additivation de fibres, selon la revendication 1, **caractérisé en ce que** l'incorporation de la capsule dans la matrice de polymère de la fibre est effectuée par l'écrasement des capsules sur le filament présent à la sortie de la filière au cours de la phase pendant laquelle le polymère n'a pas encore été solidifié.

18. Procédé d'additivation de fibres, selon la revendication 1, **caractérisé en ce que** les additifs à encapsuler sont, notamment : les parfums, les essences, les cosmétiques, les crèmes anticellulite et hydratantes, les déodorants, l'aloe vera, les huiles essentielles, le collagène, les extraits naturels, les répulsifs à moustique, les détachants anti-odeurs, les anti-mites, les chromophores, les encres, les colorants, les médicaments tels que les anti-inflammatoires, les cicatrisants, les vitamines et les antibiotiques.

19. Procédé d'additivation de polymères dont le procédé comprend:
l'encapsulation de l'additif dans le nanopore d'une capsule d'aluminosilicate le protégeant des températures et des autres conditions des différents procédés de fabrication que les polymères subissent ;
l'incorporation de la capsule, de préférence une nano/microcapsule, dans la matrice de polymère, et ;
le filage et/ou l'injection du polymère ; et
l'introduction de l'additif dans la matrice du polymère.

20. Procédé d'additivation des polymères, selon la revendication 19, **caractérisé en ce que** la température des procédés de fabrication des polymères est supérieure à 300° C.

21. Procédé d'additivation de polymères, selon la revendication 19, **caractérisé en ce que** la capsule incorporée dans la matrice de polymère est un aluminosilicate, présentant un rapport variable Si/Al allant de 1 à l'infini, avec une taille de particule comprise entre 50 nm et 40 microns.

22. Procédé d'additivation de polymères, selon la revendication 19, **caractérisé en ce que** les conditions d'encapsulation de l'additif engendrent l'encapsulation non permanente de celui-ci dans un aluminosilicate nanoporeux, entraînant le dosage contrôlé de l'additif.

23. Procédé d'additivation de polymères, selon la revendication 22, **caractérisé en ce que** l'humidité contenue dans les aluminosilicates est inférieure à 15 %, de préférence inférieure à 5%.

24. Procédé d'additivation de polymères, selon la revendication 23, **caractérisé en ce que** les aluminosilicates sont activés/déshydratés par chauffage à une température comprise entre 150 et 350° C, puis dégazéifiés à l'aide d'une pompe à vide pendant environ 1 heure.

25. Procédé d'additivation de polymères, selon la revendication 22, **caractérisé en ce que** l'additif à encapsuler est mélangé à l'aluminosilicate pour une durée allant de cinq à vingt-quatre heures, avec une agitation continue afin de favoriser le contact entre l'additif et la capsule et à une température comprise entre 25 et 200° C (selon le type d'additif à encapsuler) afin d'accélérer l'équilibre d'absorption entre l'additif et les particules d'aluminosilicate.

26. Procédé d'additivation de polymères, selon la revendication 25, **caractérisé en ce que** les proportions de la capsule et de l'additif soient comprises entre 1/3 et 1/200, et de préférence égales 1/200.

27. Procédé d'additivation de polymères, selon la revendication 22, **caractérisé en ce que** les traitements ultérieurs effectués après la mise en contact de l'additif et de la capsule d'aluminosilicate pour permettre l'encapsulation consistent en la centrifugation de l'échantillon, le séchage des capsules contenant l'additif, à une température et à une durée variables qui dépendent du type d'additif, allant de 25 à 100° C pour une durée allant de 1 à 8 heures et leur concassement pour une durée allant de 3 à 30 minutes qui écrasera les éventuels morceaux ayant pu se former pendant le procédé d'encapsulation.

28. Procédé d'additivation de polymères, selon la revendication 22, **caractérisé en ce que** la force motrice pour le dosage de l'additif correspond à la différence de concentration de celui-ci entre la capsule et le polymère, ainsi qu'à la différence de concentration de celui-ci entre le polymère et l'extérieur.

29. Procédé d'additivation de polymères, selon les revendications 19 et 21, **caractérisé en ce que**, pour effectuer l'encapsulation permanente d'un additif, un aluminosilicate est choisi avec une dimension de pores inférieure à celle des molécules des additifs qui, pour pouvoir être introduites, sont soumises à un traitement préalable tel que l'oxydation, afin que leur structure soit modifiée et qu'elles puissent passer à travers les pores, et **en ce que** une fois que l'additif est encapsulé selon les revendications 23 à 27, le processus inverse est appliqué, moyennant quoi les molécules retrouvent leur dimension.

30. Procédé d'additivation de polymères, selon les revendications 19 et 21, **caractérisé en ce que**, pour effectuer l'encapsulation permanente d'un additif, un aluminosilicate est utilisé avec une dimension de pores suffisamment large pour que l'additif puisse passer dans ses pores et suite à l'encapsulation de l'additif selon les revendications 23 à 27, un traitement ultérieur est effectué avec des xylanes, des boranes ou des germanes qui sont absorbés au niveau de l'ouverture des pores de l'aluminosilicate nanoporeux, puis oxydés par un traitement à base de vapeur ou d'autres agents oxydants afin de bloquer l'issue des additifs encapsulés.

31. Procédé d'additivation de polymères, selon les revendications 19 et 21, **caractérisé en ce que** l'encapsulation de l'additif est produit par absorption, adsorption et échange ionique de celui-ci dans l'aluminosilicate.

32. Procédé d'additivation de polymères, selon la revendication 19, **caractérisé en ce que** l'incorporation de la capsule dans la matrice du polymère est effectuée pendant l'étape de polymérisation.

33. Procédé d'additivation de polymères, selon la revendication 19, **caractérisé en ce que** l'incorporation de la capsule dans la matrice du polymère est effectuée pendant l'étape du filage ou de l'injection.

34. Procédé d'additivation de polymères, selon la revendication 19, **caractérisé en ce que** les additifs à encapsuler sont, notamment : les parfums, les essences, les cosmétiques, les répulsifs à moustique, les anti-mites, les médicaments, les chromophores, les encres et les colorants.
